# EUROPÄISCHE PATENTSCHRIFT

(11) **EP 1 872 092 B1**
(45) Veröffentlichungstag und Bekanntmachung des Hinweises auf die Patenterteilung: **03.08.2016**
(21) Anmeldenummer: 06743354.0
(22) Anmeldetag: 20.04.2006
(51) Int. Cl.: G01F 25/00, G01F 1/66

(54) **VERFAHREN ZUR BESTIMMUNG DES VOLUMEN- ODER MASSEDURCHFLUSSES EINES MEDIUMS**
METHOD FOR DETERMINING THE VOLUME FLOW RATE OR MASS FLOW RATE OF A MEDIUM
PROCEDE DE DETERMINATION DU DEBIT VOLUMIQUE OU MASSIQUE D'UNE SUBSTANCE

(30) Priorität: 20.04.2005 DE 102005018396
(43) Veröffentlichungstag der Anmeldung: 02.01.2008
(73) Patentinhaber: Endress+Hauser Flowtec AG, 4153 Reinach (CH)
(72) Erfinder: FRÖHLICH, Thomas, CH-4142 Münchenstein (CH); STRUNZ, Torsten, CH-4056 Basel (CH); ALTENDORF, Matthias, 79539 Lörrach (DE)
(74) Vertreter: Andres, Angelika Maria
(86) Internationale Anmeldenummer: PCT/EP2006/061684
(87) Internationale Veröffentlichungsnummer: WO 2006/111552

(56) Entgegenhaltungen:
- EP-A- 0 639 776
- US-A- 4 109 523
- US-A- 5 987 997
- HALSEY D M ET AL: "Flowmeters in swirling flows" JOURNAL OF PHYSICS E. SCIENTIFIC INSTRUMENTS, IOP PUBLISHING, BRISTOL, GB, Bd. 20, Nr. 8, 1. August 1987 (1987-08-01), Seiten 1036-1040, XP020018604 ISSN: 0022-3735
- BRAIN T J S ET AL: "SURVEY OF PIPELINE FLOWMETERS" JOURNAL OF PHYSICS E. SCIENTIFIC INSTRUMENTS, IOP PUBLISHING, BRISTOL, GB, Bd. 15, 1982, Seiten 967-980, XP000579920 ISSN: 0022-3735

## Beschreibung

Die Erfindung betrifft ein Verfahren zur Bestimmung des Volumen- oder Massedurchflusses eines Mediums in einer Rohrleitung bzw. in einem Messrohr über ein Schallmitnahmeverfahren.

Aus der US-PS 3,940,985 ist bereits ein sog. Ultraschall-Durchflussmessgerät bekannt geworden, bei dem der in einer Rohrleitung strömende Volumendurchfluss eines Mediums radiusabhängig gemessen wird. Insbesondere sind bei der bekannten Lösung mehrere Paare von Ultraschallsensoren am Umfang eines Messrohres angebracht. Diese Ultraschallsensoren liefern Messdaten über die Strömungsgeschwindigkeiten des Mediums in unterschiedlichen Segmenten des Messrohres. Zur Ermittlung des Volumendurchflusses des Mediums durch die Rohrleitung werden die Messdaten aus den einzelnen Messpfaden mit einer geeigneten Gewichtung integriert.

Aus der WO 97/19326 ist ein Ultraschall-Durchflussmessverfahren bekannt geworden, bei dem die Geschwindigkeiten eines in einer Rohrleitung strömenden Mediums entlang unterschiedlicher Messpfade eines Ultraschall-Durchflussmessgeräts bestimmt werden. Um die Messgenauigkeit zu verbessern, ist es notwendig, Viskositätsänderungen bei der Durchflussmessung zu berücksichtigen. Änderungen in der Viskosität eines Mediums werden beispielsweise durch Temperaturänderungen hervorgerufen. Um diesem Umstand Rechnung zu tragen, wird in der WO 97/19326 vorgeschlagen, durch Ermittlung oder Messung der Reynoldszahl einen Korrekturfaktor zu bestimmen, mit dem die Strömungsprofilabhängigkeit des Durchflussmessgeräts kompensiert wird. Zur Bestimmung der Reynoldszahl wird in der WO 97/19326 das Verhältnis der in den unterschiedlichen Messpfaden gemessenen Strömungsgeschwindigkeiten genutzt. Bei dieser bekannten Lösung ist eine Korrektur des strömungsprofilabhängigen Messfehlers somit nur möglich, wenn vorab die Reynoldszahl explizit bestimmt oder gemessen wird. Ein derartiges Verfahren ist relativ aufwendig - und zwar sowohl in der Kalibrierungsphase als auch nachfolgend im Messbetrieb.

Die EP-A-0 639 776 und die US-A-4 109 523 zeigen Mehrkanal-Ultraschall-Durchflussmessgeräte zur Bestimmung des Durchflusses eines Messmediums durch ein Messrohr. In der Messphase werden die Durchflusswerte der einzelnen Messpfade mit Gewichtsfaktoren belegt, um den Gesamtdurchfluss zu errechnen.

Der Erfindung liegt die Aufgabe zugrunde, ein kostengünstiges Verfahren zur hochgenauen Bestimmung des Volumen- oder Massedurchflusses durch eine Rohrleitung mittels eines Durchflussmessgeräts mit mehreren Messpfaden vorzuschlagen.

Die Aufgabe wird dadurch gelöst, dass Ultraschall-Messsignale entlang mehrerer definierter Messpfade einer Rohrleitung bzw. eines Messrohres ausgesendet und/oder empfangen werden, dass in der Rohrleitung bzw. in dem Messrohr sukzessive unterschiedliche Strömungsprofile eines Messmediums ausgebildet werden und dass zu jedem Strömungsprofil ein definierter Volumendurchfluss bzw. ein definierter Massedurchfluss ermittelt wird. Jedes in der Rohrleitung bzw. in dem Messrohr ausgebildete Strömungsprofil wird anhand der in den einzelnen Messpfaden ermittelten Messwerte durch einen charakteristischen Parametersatz beschrieben. Anhand der ermittelten Messwerte in den einzelnen Messpfaden wird ein gemessener Volumen- bzw. Massedurchfluss abgeleitet. Weiterhin wird zu jedem Strömungsprofil anhand des definierten Volumen- bzw. Massedurchflusses und anhand des gemessenen Volumen- bzw. Massedurchflusses ein strömungsprofilabhängiger Korrekturfaktor errechnet, mit dem nachfolgend im Messbetrieb ein über den Parametersatz ermittelter Volumen- bzw. Massedurchfluss des Durchflussmessgeräts korrigiert wird. Das erfindungsgemäße Verfahren beruht - grob gesprochen - auf einer analytischen Berschreibung des Strömungsprofils des durch die Rohrleitung strömenden Mediums.

Insbesondere ist vorgesehen, dass das aufgrund der Messwerte in den einzelnen Messpfaden ermittelte Strömungsprofil durch eine Funktion angenähert wird. Im einfachsten Fall wird das Strömungsprofil durch ein Polynom beschrieben. Beispielsweise lässt sich ein rotationssymmetrisches Strömungsprofil durch eine Funktion der Form v(r) = (*v*ₘₐₓ,a₁ ...aₙ mit ∈ N ∈ N) beschreiben. Hierbei ist v(r) die Strömungsgeschwindigkeit des Mediums im Abstand r von der Längsachse des Messrohres, *v*ₘₐₓ die maximale Strömungsgeschwindigkeit des Mediums im Bereich der Längsache der Rohrleitung und *a*₁ , ...., *aₙ* sind die Parameter einer geeigneten Fit-Funktion, welche das Strömungsprofil genügend genau beschreibt. Ansätze für geeignete Funktionen finden sich in der Fachliteratur: So werden beispielsweise in dem Buch von Gätke: "Akustische Strömungs- und Durchflussmessung" verschiedene Ansätze aufgezeigt.

Während der Kalibrierungsphase werden die Geschwindigkeiten *vₓ*.(r₁) *vₓ*(*rₘ*) jeweils für jedes Strömungsprofil x in den Messpfaden bestimmt, wobei m die Anzahl der Messpfade charakterisiert. Diese gemessenen Geschwindigkeiten entsprechen folglich den Geschwindigkeiten des Mediums in den einzelnen m Segmenten der Rohrleitung bzw. des Messrohres. Anhand der m Messwerte lässt sich eine Fit-Kurve mit den Parametern *a*₁, ...., *aₙ* über eine Fehlerausgleichsrechnung mit der gewünschten Genauigkeit bestimmen. Sukzessive wird zu jedem Strömungsprofil *vₓ*(r) ein entsprechender Parametersatz *a*₁,...., *aₙ* ermittelt. Über eine Kalibrierung mit einem zweiten Messgerät mit einer definierter Messgenauigkeit wird zu jedem Parametersatz *a*₁,..., *aₙ* ein Korrekturfaktor MF(*a*₁, , *...., aₙ*) bestimmt werden. Über diesen Korrekturfaktor MF(*a*₁, ...., *aₙ*) ist es möglich, die Strömungsabhängigkeit des Durchflussmessgeräts zu kompensieren. Es versteht sich von selbst, dass eine sinnvolle Anzahl von Parametern *a*₁ , ...., *aₙ* von der Anzahl der zur Verfügung stehenden Messpfade abhängig ist. Prinzipiell lässt sich sagen, dass die Funktion das tatsächliche Strömungsprofil um so besser beschreibt, je mehr Messpfade zur Messung der Strömungsgeschwindigkeit und damit zur Messung des Strömungsprofils zur Verfügung stehen.

Die Erfindung wird anhand der nachfolgenden Figuren näher erläutert. Es zeigt:
Fig. 1: eine schematische Darstellung eines Ultraschall-Durchflussmessgeräts mit vier Messpfaden,
Fig. 2: ein Flussdiagramm, das die einzelnen Arbeitsschritte während der Kalibrierungsphase des Durchflussmessgeräts verdeutlicht, und
Fig. 3: ein Flussdiagramm, das die einzelnen Arbeitsschritte während der nachfolgenden Messphase des Durchflussmessgeräts aufzeigt.

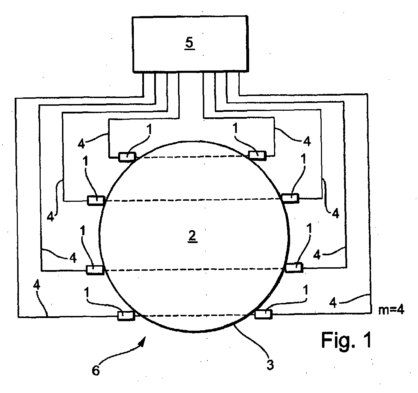

Fig. 1 zeigt eine schematische Darstellung eines Ultraschall-Durchflussmessgeräts 6 mit vier Messpfaden, also mit m = 4. Je ein Messpfad m wird von zwei Ultraschallsensoren 1 gebildet. Die Messwerte der Ultraschallsensoren 1 werden über die Verbindungsleitungen 4 an die Regel-/Auswerteeinheit 5 weitergeleitet. Die Regel-/Auswerteeinheit 5 ermittelt anhand der Laufzeitdifferenz der Ultraschall-Messignale in Strömungsrichtung und entgegen der Strömungsrichtung des Mediums 2 den Volumen- bzw. Massedurchfluss des Mediums 2 durch die Rohrleitung 3. Die Ultraschallsensoren 1 sind so am Umfang des Messrohres bzw. der Rohrleitung 3 angeordnet, dass sie in Abhängigkeit vom Abstand r zur Längsachse 7 des Messrohres bzw. der Rohrleitung 3 Information über die Strömungsgeschwindigkeit v(*r*₁) .... v(*rₘ*) des Mediums 2 bereitstellen.

Erfindungsemäß werden die aus den unterschiedlichen Messpfaden m gelieferten Messwerte, die das Strömungsprofil des Mediums 2 hinlänglich genau beschreiben, durch eine Fit-Kurve angenähert, die ihrerseits durch einen Parametersatz *a*₁ , *...., aₙ* hinreichend genau beschreibbar ist. Bei einem rotationssymmetrischen Strömungsprofil hat die Fit-Kurve bevorzugt die Form v(r) = (*v*ₘₐₓ, *a*₁ , *aₙ* mit n ∈ N), wobei *v*ₘₐₓ die im Bereich der Längsachse gemessene Strömungsgeschwindigkeit des Messmediums 2 darstellt.

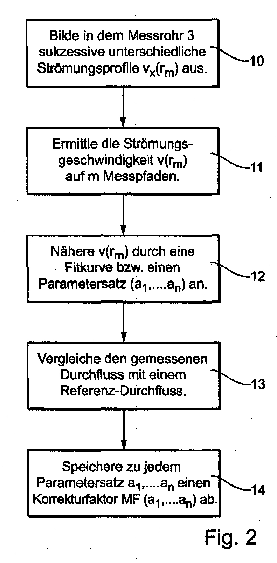

Fig. 2 zeigt ein Flussdiagramm, das die einzelnen Arbeitsschritte während der Kalibrierungsphase des Durchflussmessgeräts 6 verdeutlicht. Sukzessive werden in der Rohrleitung 3 bzw. in dem Messrohr unterschiedliche Strömungsprofile *vₓ*(r) ausgebildet - dies ist in Punkt 10 dargestellt. Als Medium 2 für die Durchführung der Kalibrierung wird beispielsweise Wasser verwendet; allerdings ist es auch möglich, die Kalibrierung mit einem Medium 2 durchzuführen, das im späteren Messbetrieb mit dem Durchflussmessgerät 6 in der Rohrleitung 3 bzw. in dem Messrohr tatsächlich gemessen werden soll. Ein typisches Beispiel ist hier Erdöl. Diese Einschränkung ist jedoch keine notwendige Charakteristik des erfindungsgemäßen Verfahrens, da der wesentliche Vorteil des erfndungsgemäßen Verfahren darin zu sehen ist, dass es bei der Bestimmung des Durchflusses des Mediums 2 näherungsweise nur auf die möglichst genaue Kenntnis des jeweiligen Strömungsprofils v(r) ankommt.

Mittels eines Ultraschall-Durchflussmessgeräts 6, das mehrere Messpfade m aufweist, wird bei Punkt 11 die radiusabhängige Strömungsprofil *vₓ*(r) bestimmt; bei Punkt 12 wird jedes Strömungsprofil *v*ₓ(r) durch eine geeignete Fit-Kurve bzw. durch einen geeigneten Parametersatz beschrieben. Anhand des gemessenen Strömungsprofils *vₓ*(r) wird der aktuell gemessene Volumendurchfluss bestimmt.

Anschließend wird der unter Programmpunkt 13 mittels des mehrpfadigen Durchflussmessgeräts 6 bestimmte Volumendurchfluss mit einem Referenz-Volumendurchfluss eines Referenz-Durchflussmessgeräts verglichen. Bei einer Abweichung zwischen dem gemessenen Volumendurchfluss und dem über die Kalibrierung definierten Volumendurchfluss zu dem entsprechenden Strömungsprofil v(r) bzw. dem das Strömungsprofil v(r) beschreibenden Parametersatz *a*₁ , *...., aₙ* ein Korrekturfaktor MF(*a*₁, , *..... aₙ*) bestimmt und entsprechend abgespeichert. Dieser Verfahrensschritt erfolgt unter dem Programmpunkt 14.

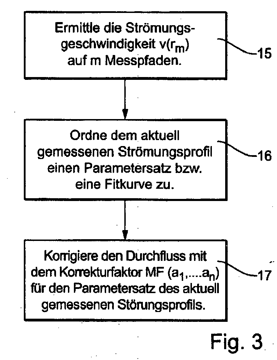

In Fig. 3 ist ein Flussdiagramm dargestellt, das die einzelnen Arbeitsschritte während des nachfolgenden Messbetriebs des Durchflussmessgeräts 6 verdeutlicht. Die Strömungsgeschwindigkeit des Mediums 2 in der Rohrleitung 3 bzw. in dem Messrohr wird in abhängig von dem Radius r in mehreren Messpfaden m bestimmt - siehe Programmpunkt 15. Das gewonnene Strömungsprofil v(r) wird bei Programmpunkt 16 durch eine Fit-Kurve, die beispielsweise die Form v(r) = (*v*ₘₐₓ, *a*₁ , ...., *aₙ* mit n ∈ N) hat, bzw. durch einen die Fit-Kurve beschreibenden Parametersatz *a*₁, ...., *aₙ* charakterisiert. Der während des Messbetriebs gewonnene Parametersatz *a*₁, ...., *aₙ* wird mit den während des Kalibrierbetriebs gemessenen Parametersätzen *a*₁ , *aₙ* verglichen, wobei der Paramtersatz *a*₁ ...., *aₙ* ausgewählt wird, bei dem die größte Übereinstimmung auftritt. Die Korrektur des gemessenen Volumendurch flusses erfolgt anschließend bei Punkt 17 über den dem Parametersatz *a*₁, *....*, *aₙ* zugeordneten Korrekturfaktor MF(*a*₁, , ...., *aₙ*)*.*

## Patentansprüche

1. Verfahren zur Bestimmung des Volumen- oder des Massedurchflusses eines Mediums (3) in einer Rohrleitung (3) bzw. in einem Messrohr mit dem Radius (R) über ein Schallmitnahmeverfahren,
wobei Ultraschall-Messsignale entlang mehrerer definierter Messpfade (m) ausgesendet und/oder empfangen werden,
wobei während einer Kalibrierphase in der Rohrleitung (3) bzw. in dem Messrohr sukzessive unterschiedliche Strömungsprofile (v(r)) eines Messmediums (2) ausgebildet werden und wobei zu jedem Strömungsprofil (v(r)) ein definierter Volumendurchfluss bzw. ein definierter Massedurchfluss ermittelt wird, wobei anhand der in den einzelnen Messpfaden (m) ermittelten Messwerte (v(*r*₁) .... v(*rₘ*)), in Abhängigkeit vom Abstand r = r₁, ..., rₘ zur Längsachse (7) des Messrohrs bzw. der Rohrleitung (3), jedes in der Rohrleitung (3) bzw. in dem Messrohr ausgebildete Strömungsprofil (v(r)) durch einen charakteristischen Parametersatz (*a*₁, *....*, *aₙ* mit n ∈ N) einer geeigneten Fit-Funktion beschrieben wird, und wobei zu jedem Strömungsprofil (v(r)) anhand eines Vergleichs des definierten Volumen- bzw. Massedurchflusses mit einem Referenzvolumen- bzw. Referenzmassedurchfluss eines Referenzdurchflussmessgeräts ein strömungsprofilabhängiger Korrekturfaktor MF(*a*₁ ,...., *aₙ*) errechnet wird, und
wobei nachfolgend im Messbetrieb ein über einen während des Messbetriebs gewonnenen Parametersatz (*a*₁, ...., *aₙ* mit n ∈ N) ermittelter Volumen- bzw. Massedurchfluss mit einem während der Kalibrierphase bestimmten strömungsprofilabhängigen Korrekturfaktor MF(*a*₁*, ...., aₙ*) korrigiert wird.

2. Verfahren nach Anspruch 1,
wobei das Strömungsprofil (v(r)) durch ein Polynom als Fit-Funktion beschrieben wird.

3. Verfahren nach Anspruch 1,
wobei ein rotationssymmetrisches Strömungsprofil durch eine Fit-Funktion der Form v(r) = (*v*_{max,} *a*₁ , *....*, *aₙ* mit n ∈N) beschrieben wird, wobei *v*ₘₐₓ die im Bereich der Längsachse gemessene Strömungsgeschwindigkeit des Messmediums (2) darstellt.

## Claims

1. Procedure for determining the volume flow or the mass flow of a medium (2) in a pipe (3) or in a measuring tube with the radius (R) via an ultrasonic procedure, wherein ultrasonic measuring signals are transmitted and/or received along several defined measuring paths (m),
wherein different successive flow profiles (v(r)) of a medium under measurement (2) are formed during a calibration phase in the pipe (3) and wherein a defined volume flow or a defined mass flow is determined for every flow profile (v(r)), wherein each flow profile (v(r)) formed in the pipe (3) or in the measuring tube is described by a characteristic parameter set (a₁, ..., aₙ where n ∈ N) of a suitable fit function on the basis of the measured values (v(r₁) ... (v(rₘ)) determined in the individual measuring paths (m), depending on the distance r = r₁, ... rₘ in relation to the longitudinal axis (7) of the measuring tube or pipe (3), and
wherein a correction factor MF(a₁, ..., aₙ) which depends on the flow profile is calculated for every flow profile (v(r)) by comparing the defined volume flow or mass flow with a reference volume flow or reference mass flow of a reference flowmeter, and wherein a volume flow or mass flow determined using a parameter set (a₁, ..., aₙ where n ∈ N) acquired during measuring operation is subsequently corrected during measuring operation by a correction factor MF(a₁, ..., aₙ) that is determined during the calibration phase and depends on the flow profile.

2. Procedure as claimed in Claim 1,
wherein the flow profile (v(r)) is described as a fit function by a polynomial.

3. Procedure as claimed in Claim 1,
wherein a rotationally symmetric flow profile is described by a fit function in the form v(r) = (vₘₐₓ, a₁, ..., aₙ where n ∈ N), wherein vₘₐₓ represents the flow velocity of the medium under measurement (2) which is measured around the longitudinal axis.

## Revendications

1. Procédé destiné à la détermination du débit volumique ou massique d'un produit (2) dans une conduite (3) ou dans un tube de mesure avec le rayon (R) par un procédé à ultrasons,
pour lequel des signaux de mesure ultrasonores sont émis et/ou reçus le long de plusieurs circuits de mesure (m),
pour lequel différents profils d'écoulement (v(r)) successifs d'un produit mesuré (2) sont formés pendant une phase d'étalonnage dans la conduite (3) ou dans le tube de mesure, et un débit volumique défini ou un débit massique défini est déterminé pour chaque profil d'écoulement (v(r)),
pour lequel est décrit, au moyen des valeurs mesurées (v(r₁) ... (v(rₘ)) déterminées dans les différents circuits de mesure (m), en fonction de la distance r = r₁, ... rₘ par rapport à l'axe longitudinal (7) du tube de mesure ou de la conduite (3), chaque profil d'écoulement (v(r)) formé dans la conduite (3) ou dans le tube de mesure par un jeu de paramètres caractéristique (a₁, ..., aₙ avec n ∈ N) d'une fonction fit appropriée, et
pour lequel est calculé pour chaque profil d'écoulement (v(r)) au moyen d'une comparaison entre le débit volumique ou massique défini et un débit volumique de référence ou débit massique de référence un facteur de correction MF(a₁, ..., aₙ) dépendant du profil d'écoulement, et
pour lequel l'on corrige ensuite, en mode de mesure, un débit volumique ou massique déterminé par le biais d'un jeu de paramètres (a₁, ..., aₙ avec n ∈ N) acquis pendant le mode de mesure au moyen d'un facteur de correction MF(a₁, ..., an) dépendant du profil d'écoulement déterminé pendant la phase d'étalonnage.

2. Procédé selon la revendication 1,
pour lequel le profil d'écoulement (v(r)) est décrit au moyen d'un polynôme en tant que fonction fit.

3. Procédé selon la revendication 1,
pour lequel un profil d'écoulement à symétrie de révolution est décrit au moyen d'une fonction fit de la forme v(r) = (vₘₐₓ, a₁, ..., an avec n ∈ N), où vₘₐₓ représente la vitesse d'écoulement du produit (2) mesurée dans la zone de l'axe longitudinal.
